**Europäisches Patentamt**

**European Patent Office**

**Office européen des brevets**

(11) Numéro de publication : **0 459 339 B1**

(12) **FASCICULE DE BREVET EUROPEEN**

(45) Date de publication du fascicule du brevet :
08.03.95 Bulletin 95/10

(21) Numéro de dépôt : **91108561.1**

(22) Date de dépôt : **27.05.91**

(51) Int. Cl.⁶ : **H04L 27/22**

(54) **Dispositif pour la mesure de puissance,la correction de composante continue et la translation en bande de base d'un signal GMSK.**

(30) Priorité : **31.05.90 FR 9006786**

(43) Date de publication de la demande :
**04.12.91 Bulletin 91/49**

(45) Mention de la délivrance du brevet :
**08.03.95 Bulletin 95/10**

(84) Etats contractants désignés :
**AT BE CH DE DK ES FR GB GR IT LI LU NL SE**

(56) Documents cités :
**EP-A- 0 105 513**

(73) Titulaire : **ALCATEL MOBILE
COMMUNICATION FRANCE
15, rue de la Baume
F-75008 Paris (FR)**

(72) Inventeur : **Rousseau, Emmanuel
22, rue Jean Mermoz
F-75008 Paris (FR)**
Inventeur : **Desperben, Lydie
10, rue Charles Chefson
F-92270 Bois Colombes (FR)**
Inventeur : **Chateau, Alain
16, sente de la tour fine
F-95220 Herblay (FR)**

(74) Mandataire : **Weinmiller, Jürgen et al
Lennéstrasse 9
Postfach 24
D-82336 Feldafing (DE)**

EP 0 459 339 B1

## Description

La présente invention concerne un dispositif de traitement numérique qui permet, entre autres, d'effectuer la mesure de puissance, la correction de la composante continue et la translation en fréquence d'un signal de nature complexe.

Ces différentes mesures sont nécessaires, notamment, dans le système cellulaire numérique de radiocommunication défini par le Groupe Spécial Mobile (GSM) de la Conférence Européenne des Administrations des Postes et Télécommunications (CEPT). Dans ce système, un équipement d'émission connu sous le nom de station de base émet sur un canal un signal ayant subi une modulation dite à déplacement minimal à filtre gaussien (GMSK) spécifiée dans la recommandation 05.04 du GSM.

Cette modulation produit des signaux de modulation en quadrature de phase conventionnellement référencés I et Q caractérisant la phase du signal d'émission selon une fréquence de rythme. Un équipement de réception tel qu'un terminal mobile est donc prévu pour produire des signaux de réception numériques par échantillonnage, selon la fréquence de rythme, du signal d'émission transposé en bande de base. Ces échantillons comprenant une composante selon chacun des signaux de modulation I et Q peuvent donc s'interpréter comme des échantillons complexes.

Le signal d'émission peut prendre différentes formes et particulièrement celles d'un canal de diffusion (BCCH), d'un canal de contrôle de fréquence (FCH) et d'un canal de trafic (TCH). Le canal de diffusion comprend les informations nécessaires à l'établissement d'une communication. Il faut donc connaître sa puissance compte-tenu de la composante continue introduite par l'équipement de réception, notamment pour l'identifier parmi les différents canaux reçus. L'équipement de réception va en effet considérer comme canal de diffusion celui qu'elle reçoit avec la plus forte puissance. Le canal de contrôle de fréquence qui est identifié de par les informations transmises par le canal de diffusion est utilisé pour synchroniser l'équipement de réception sur l'équipement d'émission. Il faut connaître sa composante continue et sa puissance de manière à régler les circuits de démodulation. Il faut également convertir le signal en bande de base à quatre états de phases en un signal à deux états de phase pour les besoins de la démodulation, opération connue sous le nom de translation en fréquence. Il faut, de plus, réaliser une opération de filtrage qui est une étape dans la phase de synchronisation. Le canal de trafic supporte l'information proprement dite de la communication qu'il s'agisse de paroles ou de données. Il faut également corriger sa composante continue, effectuer une translation de fréquence et mesurer sa puissance pour les raisons données ci-dessus. Tous ces traitements sont avantageusement faits "au fil de l'eau " ce qui signifie que l'ensemble des données relatives à une série d'échantillons complexes est calculé pendant la période de transmission séparant l'apparition de cette série de l'apparition de la série suivante comprenant le même nombre d'échantillons.

Il est ainsi possible de réaliser un module pour chacun de ces canaux (BCCH, FCH, TCH) afin de réaliser les différents traitements. Cette solution nécessite un grand nombre de circuits élémentaire tels que mémoires, circuits d'addition etc. Elle se prête donc mal à une miniaturisation indispensable, par exemple, dans le cadre d'un terminal portatif.

Il est également possible d'utiliser un processeur de signal numérique unique pour traiter les différents canaux. Toutefois compte-tenu des contraintes de temps spécifiées par le GSM et lorsque les traitements sont faits "au fil de l'eau", ce processeur doit être très puissant. Il doit, de plus, être associé à une mémoire très rapide. Ces deux composants sont onéreux et cette deuxième solution n'est manifestement pas économique.

La présente invention a ainsi pour objet un dispositif de traitement de signal numérique qui permet d'effectuer les différents traitements exposés ci-dessus en liaison avec les canaux de diffusion, de contrôle de fréquence et de trafic présentant un nombre de circuits élémentaires réduits. Sa réalisation, de plus, est particulièrement économique.

Bien qu'elle trouve une application avantageuse dans le cadre du système cellulaire numérique de radiocommunications, elle s'applique également à tout autre système dans lequel il faut effectuer des traitements de même type sur un signal de nature complexe.

Le dispositif de traitement de signal numérique prévu notamment pour la mesure de puissance, la correction de composante continue et la translation en fréquence de l'invention comprend :

- un premier additionneur produisant un premier signal d'addition à partir d'un premier opérande et d'un signal de sortie,
- une mémoire vive prévue pour produire ce signal de sortie et pour recevoir un signal d'entrée; il comprend de plus :
- un circuit d'inversion commandée fournissant sur une sortie au moins la valeur absolue, la valeur vraie ou la valeur opposée du premier signal d'addition,
- une mémoire morte produisant un premier signal de puissance représentant la partie la moins significative du carré de la valeur absolue exprimée sur un nombre de bits correspondant à la capacité du

2

premier additionneur,

- un premier circuit de multiplexage produisant le premier opérande à partir d'un échantillon de signal numérique, de la valeur vraie, de la valeur opposée ou du premier signal de puissance,
- un deuxième circuit de multiplexage produisant le signal d'entrée à partir du premier signal d'addition, de la valeur vraie ou de la valeur opposée,
- un séquenceur recevant un signal d'horloge et comprenant des moyens de commander sélectivement la mémoire vive, le circuit d'inversion commandée, et les premier et deuxième circuits de multiplexage, de manière à effectuer notamment une correction de la composante continue et une translation en fréquence sur un échantillon, et une mesure de puissance sur une série d'échantillons.

De plus, dans le dispositif de traitement de signal numérique prévu notamment pour la mesure de puissance, la correction de composante continue et la translation en fréquence, le séquenceur est également prévu pour permettre le filtrage d'une série d'échantillons.

En outre, dans le dispositif de traitement de signal numérique prévu notamment pour la mesure de puissance, la correction de composante continue et la translation en fréquence le séquenceur est prévu pour permettre l'estimation de la composante continue d'une série d'échantillons.

Dans une forme du dispositif de traitement de signal numérique prévu notamment pour la mesure de puissance, la correction de composante continue et la translation en fréquence, le carré de la valeur absolue pouvant prendre une valeur supérieure à la capacité du premier additionneur la mémoire morte produit de plus un deuxième signal de puissance représentant la partie la plus significative du carré de la valeur absolue, un deuxième additionneur produit comme deuxième signal d'addition la somme du deuxième signal de puissance et du signal de retenue issu du premier additionneur, le premier circuit de multiplexage étant prévu pour recevoir de plus le deuxième signal d'addition, le séquenceur étant prévu de plus pour effectuer la mesure de puissance sur lesdits premier et deuxième signaux de puissance.

Dans une variante du dispositif de traitement de signal numérique prévu notamment pour la mesure de puissance, la correction de composante continue et la translation en fréquence, les échantillons étant alternativement un échantillon réel et un échantillon imaginaire composant un échantillon complexe dont les bits se présentent successivement dans un signal de réception, il comprend un registre d'entrée effectuant la mise en parallèle de cet échantillon complexe suivi d'un premier et d'un deuxième registres de transfert produisant respectivement l'échantillon réel et l'échantillon imaginaire à destination du premier circuit de multiplexage, le séquenceur comprenant des moyens de commande de ces trois registres.

Avantageusement, dans le dispositif de traitement de signal numérique prévu notamment pour la mesure de puissance, la correction de composante continue et la translation en fréquence, le circuit d'inversion commandée produit un signal de valeur absolue correspondant à la valeur absolue du premier signal d'addition pour un premier état d'un signal de commande d'inversion, et produit un signal de valeur opposée prenant soit la valeur du premier signal d'addition soit son opposée selon que le signal de commande d'inversion est respectivement dans un deuxième ou un troisième état, le séquenceur comprenant des moyens pour produire le signal de commande d'inversion.

Dans un mode de réalisation du dispositif de traitement de signal numérique prévu notamment pour la mesure de puissance, la correction de composante continue et la translation en fréquence, le premier circuit de multiplexage comprend un premier multiplexeur produisant un premier signal de multiplex à partir de l'échantillon réel et de l'échantillon imaginaire et comprend un deuxième multiplex produisant le premier opérande comme deuxième signal de multiplex à partir du premier signal de multiplex, du signal de valeur opposée, du premier signal de puissance ou du deuxième signal d'addition, ces deux multiplexeurs étant commandés par le séquenceur.

De même, dans le dispositif de traitement de signal numérique prévu notamment pour la mesure de puissance, la correction de composante continue et la translation en fréquence, le deuxième circuit de multiplexage comprend un troisième multiplexeur produisant un troisième signal de multiplex à partir du premier signal d'addition ou du signal de valeur opposée, et comprend un quatrième multiplexeur produisant le signal d'entrée à partir du troisième signal de multiplex ou d'un signal de donnée externe, ces deux derniers multiplexeurs étant commandés par le séquenceur.

De plus, le dispositif de traitement de signal numérique prévu notamment pour la mesure de puissance, la correction de composante continue et la translation en fréquence comprend un registre de sortie produisant un signal de registre de sortie qui est le deuxième opérande du premier additionneur et dont la valeur est celle du signal de sortie en réponse à un signal de transfert issu du séquenceur.

En outre, le dispositif de traitement de signal numérique prévu notamment pour la mesure de puissance, la correction de la composante continue et la translation en fréquence comprend un registre d'interface recevant le signal de sortie.

Si, dans le dispositif de traitement de signal numérique prévu notamment pour la mesure de puissance, la correction de composante continue et la translation en fréquence, le signal de réception est un canal de trafic du système de radiocommunications cellulaire numérique, les échantillons complexes se présentant périodiquement selon une période de transmission, le signal d'horloge a une fréquence telle que la correction de la composante continue, la translation en fréquence et la mesure de puissance relatives à un échantillon complexe se font pendant une dite période de transmission.

Si désormais, dans le dispositif de traitement de signal numérique prévu notamment pour la mesure de puissance, la correction de composante continue et la translation en fréquence, le signal de réception est un canal de contrôle de fréquence, le signal d'horloge a une fréquence telle que la correction de la composante continue, la translation en fréquence, le filtrage et la mesure de puissance relatives à un échantillon complexe se font pendant une période de transmission.

Si maintenant, dans le dispositif de traitement de signal numérique prévu notamment pour la mesure de puissance, la correction de composante continue et la translation en fréquence, le signal de réception est un canal de diffusion, le signal d'horloge a une fréquence telle que l'estimation de la composante continue instantanée, la correction de la composante continue et la mesure de puissance relatives à un dit échantillon complexe se font pendant une période de transmission.

Avantageusement, dans le dispositif de signal numérique prévu notamment pour la mesure de puissance, la correction de composante continue et la translation en fréquence, le séquenceur progressant d'un pas sur chaque front du signal d'horloge, ce signal d'horloge a une fréquence identique à la fréquence d'apparition des bits d'un dit échantillon.

Les différents objets et caractéristiques de la présente invention apparaîtront maintenant avec plus de détails dans le cadre d'un exemple de réalisation donné à titre non limitatif en se référant aux figures annexées qui représentent :
- la figure 1, un schéma par bloc d'un mode de réalisation du dispositif selon l'invention,
- la figure 2, un schéma logique d'une forme de réalisation d'un circuit d'inversion commandée faisant partie du dispositif de l'invention,
- la figure 3, le chemin des données numériques dans le dispositif représenté à la figure 1 dans un premier mode de fonctionnement,
- la figure 4, le chemin des données numériques dans le dispositif représenté à la figure 1 dans un deuxième mode de fonctionnement,
- la figure 5, le chemin des données numériques dans le dispositif représenté à la figure 1 dans un troisième mode de fonctionnement,
- la figure 6, le chemin des données numériques dans le dispositif représenté à la figure 1 dans un quatrième mode de fonctionnement,
- la figure 7, le chemin des données numériques dans le dispositif représenté à la figure 1 dans un cinquième mode de fonctionnement.

Les éléments identiques présents dans différentes figures porteront un seule référence.

Le dispositif de traitement de signal numérique de l'invention est donc prévu pour effectuer les opérations suivantes:
- estimation de la composante continue instantanée
- correction de la composante continue
- translation en fréquence
- filtrage
- mesure de puissance

Il reçoit un signal de réception R qui se présente sous la forme d'une succession d'échantillons V complexes :

$$V_k = I_k + jQ_k$$

où I est un échantillon réel, Q un échantillon imaginaire, et k l'ordre d'apparition de l'échantillon en référence à une origine qui sera précisée ultérieurement.

L'estimation de la composante continue instantanée consiste à calculer la valeur moyenne d'une première série de n1 échantillons. Cette valeur moyenne, si elle est multipliée par n1, consiste en une simple addition des échantillons successifs, et c'est cette valeur qui sera considérée par la suite. En notant DCiI et DCiQ les valeurs respectives de la composante continue réelle instantanée et celle de la composante continue imaginaire instantanée, ces valeurs s'expriment par les équations suivantes :

$$DCiI = \sum_{j=1}^{n1} I_j \qquad\qquad DCiQ = \sum_{j=1}^{n1} Q_j$$

La correction de la composante continue consiste à ajouter une valeur de correction réelle DCI et une valeur de correction imaginaire DCQ respectivement aux échantillons réel I et imaginaire Q. Si l'on note $J'_k$ et $Q'_k$ les échantillons respectifs corrigés, ils sont définis par l'équation suivante :

$$V'k = I'_k + jQ'_k$$
$$I'_k = I_k + DCI \qquad Q'_k = Q_k + DCQ$$

La translation en fréquence découle du type de modulation (GMSK) utilisé.

Elle consiste à effectuer sur un échantillon corrigé un déphasage négatif de valeur $\pi/2$ multiplié, par son ordre d'apparition k pris à compter de zéro. Si $V''_k$ est l'échantillon translaté de composantes respectives $I''_k$ et $Q''_k$, il satisfait à l'équation suivante :

$$V''_k = V'_k \cdot e^{-j.k.\pi/2}$$

Si l'on note k' la valeur de k modulo 4, on peut donc définir les échantillons translatés réels et imaginaires comme suit :

| | | |
|---|---|---|
| $k' = 0$ | $I'' k = I'k,$ | $Q'' k = Q'k$ |
| $k' = 1$ | $I'' k = Q'k,$ | $Q'' k = -I'_k$ |
| $k' = 2$ | $I'' k = -I'k,$ | $Q'' k = -Q'k$ |
| $k' = 3$ | $I''k = -Q'k,$ | $Q'' k = I'k$ |

Le filtrage consiste à faire la somme d'une deuxième série de n2 échantillons translatés. L'échantillon filtré W de composantes respectives $I_f$ et $Q_f$ se définit donc par les équations suivantes :

$$W = I_f + jQ_f$$

$$If = \sum_{j=1}^{n2} I''_j \qquad\qquad Qf = \sum_{j=1}^{n2} Q''_j$$

La mesure de puissance consiste à faire la somme des carrés d'une troisième série de n3 échantillons corrigés.

La puissance P répond donc à l'équation suivante :

$$P = \sum_{j=1}^{n3} (I'^2_j + Q'^2_j)$$

Le dispositif de traitement du signal numérique est prévu pour fonctionner selon trois modes distincts selon que le signal de réception est un canal de traffic, un canal de contrôle de fréquence ou un canal de diffusion.

Dans le mode traffic, le dispositif qui reçoit un canal de traffic doit effectuer la correction de la composante continue, la translation en fréquence et la mesure de puissance.

Dans le mode contrôle de fréquence le dispositif qui reçoit un canal de contrôle de fréquence, doit effectuer la correction de la composante continue, la translation en fréquence, le filtrage et la mesure de puissance.

Dans le mode diffusion, le dispositif qui reçoit un canal de diffusion, doit effectuer l'estimation de la composante continue instantanée, la correction de composante continue et la mesure de puissance.

Bien que certaines opérations soient communes aux différents modes de fonctionnement, elles ne sont pas exécutées de la même manière. En premier lieu c'est donc la structure du dispositif qui sera détaillée, tandis qu'ensuite les différents modes de fonctionnement seront explicités.

Dans le cadre du système GSM les échantillons réel I et imaginaire Q sont représentés en complément à 2 sur 8 bits. La mesure de puissance qui fait appel à une élévation au carré va donc traiter des nombres comprenant plus de douze bits. Dans le dispositif adopté, ces nombres seront décomposés en un premier mot correspondant aux douze bits de poids faibles et un 2ème mot sur 12 bits également correspondant aux bits de poids fort.

Selon une technique connue, les opérations sur ces nombres seront réalisées séparément sur chaque type de mot pour produire un signal de puissance sur deux mots, une valeur de puissance inférieure comprenant les 12 bits de poids faible et une valeur de puissance supérieure comprenant les bits de poids fort.

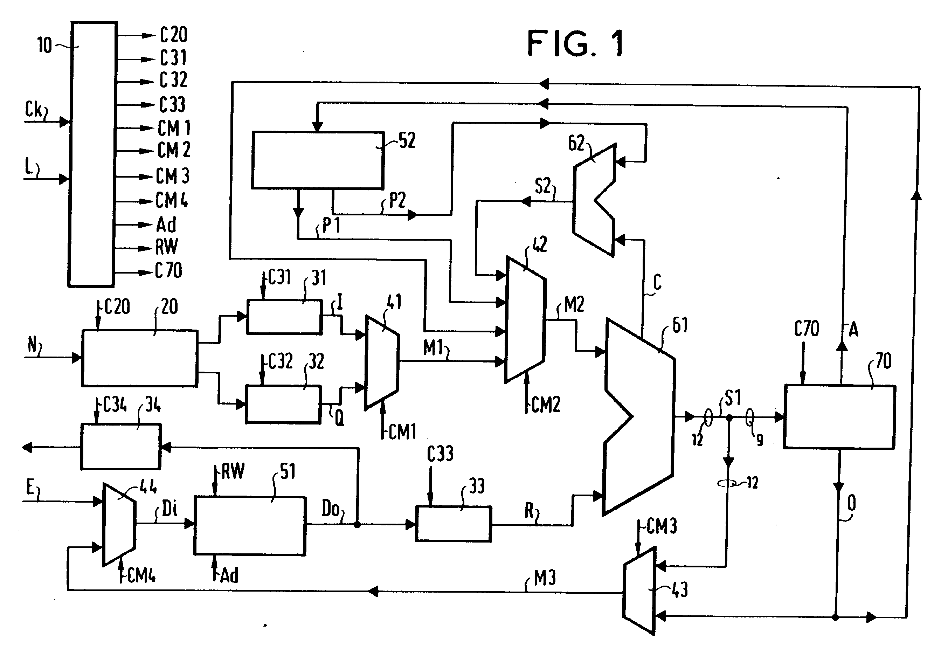

Le dispositif de traitement de signal numérique apparaît dans un mode de réalisation particulier à la figure 1. Il comprend un séquenceur 10 recevant un signal d'horloge Ck et un signal de configuration L identifiant le mode de fonctionnement (trafic, contrôle, diffusion) et les nombres d'échantillons (n1, n2, n3) contenus dans chaque série. Ce séquenceur commande le fonctionnement des autres organes du dispositif qui seront maintenant présentés. La fréquence du signal d'horloge Ck est exactement égale à 16 fois la fréquence d'apparition des échantillons complexes, soit, dans le cadre du GSM, sensiblement 4,33 MHz pour une durée de 3,69 μs par échantillon complexe.

Un registre d'entrée 20 de 16 bits reçoit le signal de réception N où les bits composant les différents échantillons complexes se présentent en série et effectue la mise en parallèle de ces bits pour présenter un premier paquet de 8 bits et un deuxième paquet de 8 bits respectivement à un premier 31 et un deuxième 32 registres de transfert en réponse à un signal de commande d'entrée C20 provenant du séquenceur 10.

Les premiers et deuxièmes registres de transfert produisent donc sur leur sortie respectivement l'échantillon réel I et l'échantillon imaginaire Q en réponse respectivement à un premier C31 et à un deuxième C32 signaux de transfert issus du séquenceur 10.

Les registres d'entrée et de transferts ne sont pas strictement nécessaires à l'invention, ils sont utilisés uniquement pour la mise en parallèle d'une liaison série et se justifient seulement dans ce cas.

Un premier multiplexeur 41 produit sur sa sortie un premier signal de multiplex M1 qui prend la valeur de l'échantillon réel I ou de l'échantillon imaginaire Q en réponse à un premier signal de sélection CM1 issu du séquenceur 10.

Un deuxième multiplexeur 42 à 4 entrées produit un deuxième signal de multiplex M2 sur 12 bits en réponse à un deuxième signal de sélection CM2 issu du séquenceur 10. Une de ses entrées reçoit le premier signal de multiplex M1 qui a fait l'objet d'une extension de signe (duplication du bit de signe) de manière à l'amener sur 12 bits. Les signaux appliqués sur ses autres entrées seront définis par la suite.

Une mémoire vive 51, de type RAM par exemple, reçoit sur son entrée de données un signal d'entrée Di sur 12 bits et produit sur sa sortie de données un signal de sortie Do sur 12 bits. Elle reçoit un signal de mode RW permettant soit la lecture soit l'écriture à un emplacement identifié par un signal d'adresse Ad. Les signaux d'entrée de mode et d'adresse proviennent soit du séquenceur 10, soit d'une unité de commande non représentée car ne faisant pas partie de l'invention mais dont les caractéristiques essentielles seront définies par la suite.

Le signal de sortie Do est appliqué sur l'entrée d'un registre de sortie 33 de 12 bits qui produit comme signal de registre de sortie R ce signal de sortie Do en réponse à un troisième signal de transfert C33 issu du séquenceur 10.

Le signal de sortie Do est également appliqué à l'entrée d'un registre d'interface 34 de 12 bits qui transmet ce signal sur sa sortie en réponse à un quatrième signal de transfert C34 issu du séquenceur 10 ou de l'unité de commande.

Un premier additionneur 61 ayant deux entrées de 12 bits reçoit le deuxième signal de multiplex M2 et le signal de registre de sortie R pour produire un premier signal d'addition S1 et un signal de retenue C si le résultat de cette addition est supérieur ou égal à $2^{12}$.

Un circuit d'inversion commandée 70 reçoit les 9 bits de poids faible du premier signal d'addition S1 et un signal de commande d'inversion C70 issu du séquenceur 10. Il est prévu pour produire un signal de valeur absolue A sur 7 bits dont la valeur est soit la valeur absolue du premier signal d'addition S1 si elle est inférieure à 128, soit 127 dans le cas contraire, lorsque le signal de commande d'inversion est dans un premier état. Il est aussi prévu pour produire un signal de valeur opposée 0 sur 9 bits dont la valeur est respectivement celle du premier signal d'addition S1 ou son opposé selon que le signal de commande d'inversion est respectivement dans un deuxième ou un troisième état.

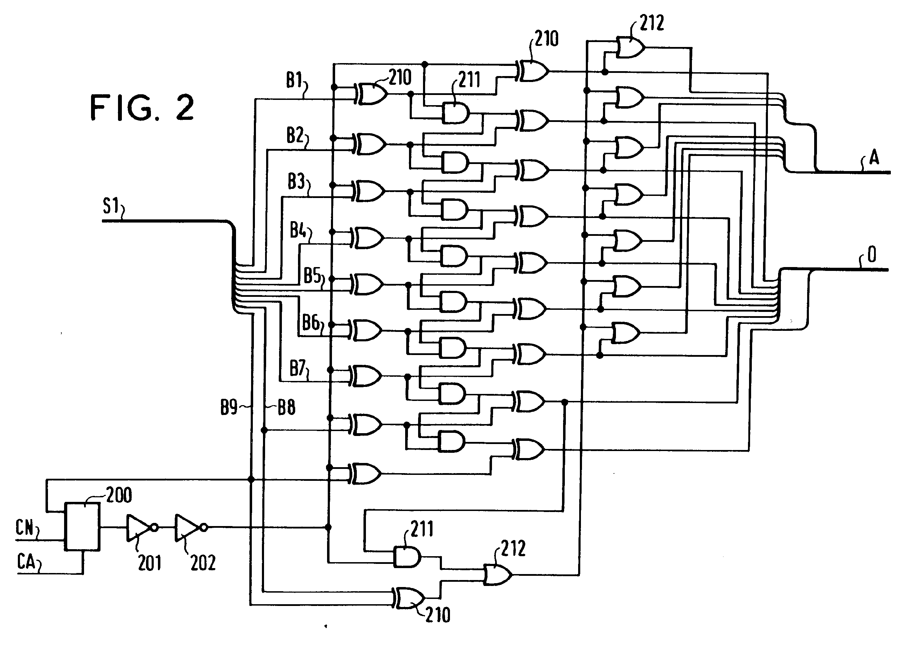

Ce circuit ne pose pas de difficultés de réalisation pour l'homme de l'art. Toutefois un exemple de schéma logique en est donné dans la figure 2 où les 9 bits de poids faible du premier signal d'addition S1 sont référencés B1 à B9 en fonction de leur poids respectif.

Le signal de commande d'inversion C70 se décompose dans ce cas en deux bits de commande CA et CN. Un circuit de multiplexage 200 produit sur sa sortie le neuvième bit B9 ou le deuxième bit de commande CN selon que le premier bit de commande CA vaut respectivement zéro ou un. Le signal de sortie du circuit de multiplexage 200 est appliqué successivement sur un premier 201 et un deuxième 202 inverseurs disposés en série. Les différentes portes logiques constituant le circuit sont des :

- portes "OU EXCLUSIF" 210,
- portes "ET" 211,
- portes "OU" 212,

Ces circuits élémentaires sont connectés tel que cela apparaît dans la figure.

Le signal de valeur opposée 0 subit une extension de signe de manière à l'amener sur 12 bits. Il est appliqué sur la deuxième entrée du deuxième multiplexeur 42.

Une mémoire morte 52, de type ROM par exemple contient dans chacun de ses emplacements une valeur numérique égale au carré de l'adresse identifiant cet emplacement. Elle produit un premier P1 et un deuxième P2 signaux de puissance qui correspondent respectivement aux douze bits de poids faible et aux deux bits de poids fort de cette valeur numérique en réponse au signal de valeur absolue A qui est appliqué sur son entrée d'adresse. Le premier signal de puissance P1 est appliqué sur la troisième entrée du deuxième multiplexeur 42.

Un deuxième additionneur 62 de 3 bits produit comme deuxième signal d'addition S2 la somme du signal de retenue C issu du premier additionneur 61 et ayant fait l'objet d'une extension de signe et du deuxième signal de puissance P2 ayant fait l'objet lui aussi d'une extension de signe. Le deuxième signal d'addition est appliqué, après extension de signe sur la quatrième entrée du deuxième multiplexeur 42.

Un troisième multiplexeur 43 produit un troisième signal de multiplex M3 qui prend la valeur du premier signal d'addition S1 ou du signal de valeur opposée 0 selon l'état d'un troisième signal de sélection CM3 issu du séquenceur 10.

Un quatrième multiplexeur 44 produit le signal d'entrée Di de la mémoire vive 51 qui prend la valeur du troisième signal de multiplex M3 ou d'un signal de donnée externe E en fonction de l'état d'un quatrième signal de sélection CM4 issu du séquenceur 10.

Les différents éléments constituant le dispositif de traitement de signal numérique étant décrits, les trois modes de fonctionnement seront maintenant détaillés en référence aux commande élaborées par le séquenceur.

Lorsque le signal de réception est un signal de traffic, une phase d'initialisation consiste à introduire les données nécessaires dans le séquenceur 10 et dans la mémoire vive 51. L'unité de commande fournit au séquenceur par le signal de configuration L :

- le mode de fonctionnement, trafic, précisant que les opérations correction de la composante continue, translation en fréquence et mesure de puissance doivent être effectués.
- le nombre d'échantillons à traiter, dans ce cas 156 échantillons réels I et 156 échantillons imaginaires Q.
- le nombre n3 d'échantillons sur lesquels est faite la mesure de puissance, 16 ou 64 par exemple.

Elle fournit à la mémoire vive 51 :

- les valeurs de correction réelle DCI et imaginaire DCQ, chacune sur 4 bits.

Lorsque le dispositif a ainsi été initialisé, le séquenceur démarre sur le premier front du signal d'horloge Ck et progresse d'un pas à chaque front.

Il dispose ainsi de 32 pas pour effectuer tous les traitements sur un échantillon complexe.

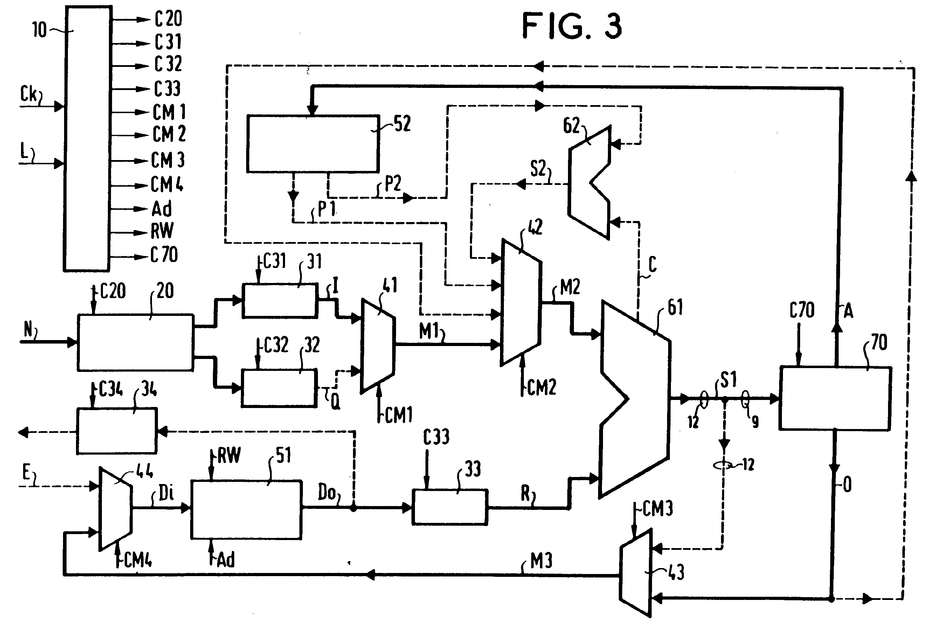

La première phase correspond à la correction de la composante continue et à la translation de fréquence pour un échantillon réel I. Elle s'étend sur les six premiers pas et le chemin des données est matérialisé par un trait plein sur la figure 3, tandis que les liaisons inutilisées figurent en pointillé :

- pas 1: production du signal de commande d'entrée C20 pour transférer le contenu du registre d'entrée 20 aux premier 31 et deuxième 32 registres de transfert,
- pas 2 : production du premier signal de transfert C31 pour produire un échantillon réel I en sortie du premier registre de transfert 31, production du premier signal de sélection CM1 de manière à égaler le premier signal de multiplex M1 à l'échantillon réel I, et production des signaux d'adresse Ad et de mode RW de manière à affecter le signal de sortie Do de la valeur de correction réelle DCI,
- pas 3 : production du deuxième signal de sélection CM2 de manière à égaler le deuxième signal de multiplex M2 au premier signal de multiplex M1 et production du troisième signal de transfert de manière à affecter le signal de registre de sortie R de la valeur de correction réelle DCI,
- pas 4 : le premier signal d'addition S1 prend la valeur de l'échantillon réel corrigé I', soit la somme de la valeur de l'échantillon réel I et de la valeur de correction réelle DCI,
- pas 5 : le séquenceur comprenant des moyens pour établir l'ordre d'apparition k' modulo 4 de l'échantillon complexe en cours de traitement, un compteur par exemple, produit le signal de commande d'inversion C70 dans son deuxième état si k' vaut 0 ou 3 et dans son troisième état si k' vaut 1 ou 2 (le circuit d'inversion commandée 70 produisant ainsi le signal de valeur opposée 0) et produit les troisièmes CM3 et quatrième CM4 signaux de sélection de manière à égaler le signal d'entrée Di au signal de valeur opposée 0,
- pas 6 : production des signaux d'adresse Ad et de mode RW de manière à inscrire en mémoire vive 51 la valeur du signal de valeur opposée 0 à l'adresse du kième échantillon réel translaté I″k si k' est pair et à l'adresse du kième échantillon imaginaire translaté Q″k si k est impair, et production du signal de commande d'inversion C70 dans un premier état de manière à produire le signal de valeur absolue A.

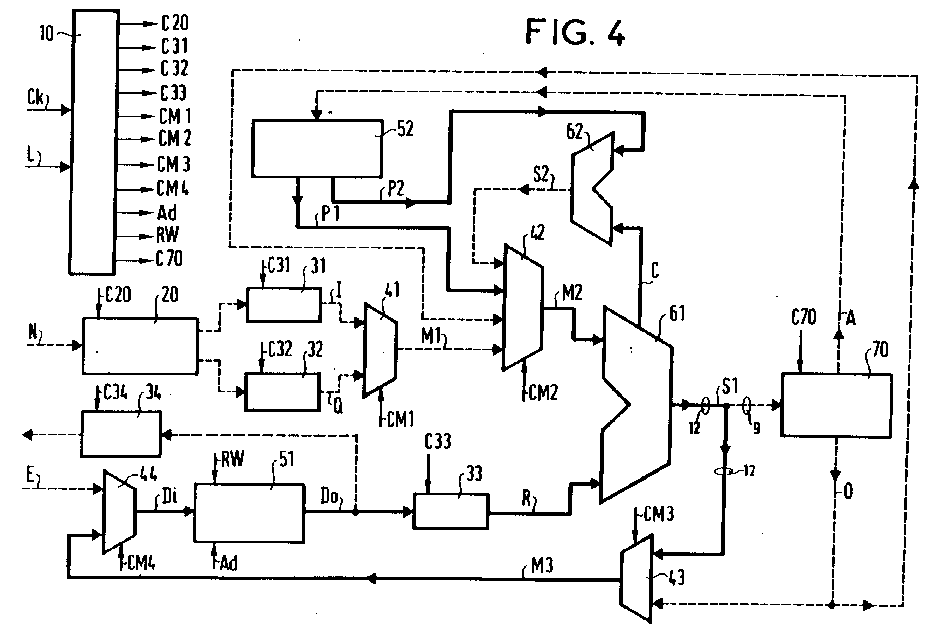

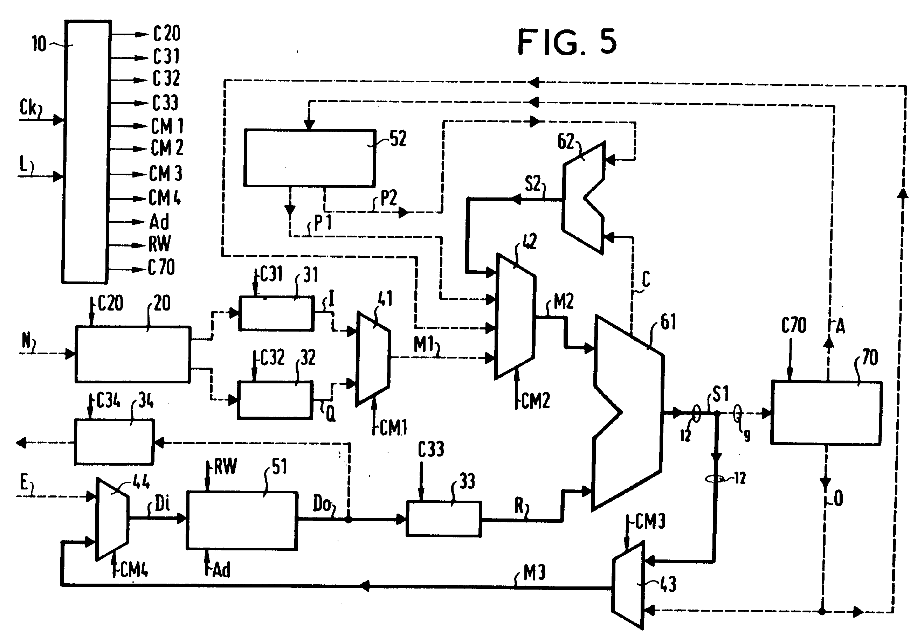

La seconde phase correspond au calcul de la puissance d'un échantillon réel corrigé I'. Elle s'étend sur les pas 7 à 10 représentés dans la figure 4 et sur les pas 11 à 14 représentés dans la figure 5 où des mêmes conventions de dessin ont été adoptés :

- pas 7 : production des signaux d'adresse Ad et de mode RW de manière à égaler le signal de sortie Do à la première valeur de puissance inférieure PI1 de la mémoire 51 si k est inférieur à n3, cette première valeur de puissance inférieure ayant été initialisée à zéro à la réception du premier échantillon, transfert du premier signal de puissance P1 sur la troisième entrée du deuxième multiplexeur 42 et du deuxième signal de puissance P2 à l'entrée du deuxième additionneur 62,

- pas 8 : production du troisième signal de transfert C33 de manière à égaler le signal de registre de sortie R à la première valeur de puissance inférieure et production du deuxième signal de sélection CM2 de manière à égaler le deuxième signal de multiplex M2 au premier signal de puissance P1,
- pas 9 : production des troisièmes CM3 et quatrième CM4 signaux de sélection de manière à affecter le signal d'entrée Di de la valeur du premier signal d'addition S1 et stockage en entrée du deuxième additionneur 62 du deuxième signal de puissance P2 et du signal de retenue C,
- pas 10 : production des signaux d'adresse Ad et de mode RW de manière à inscrire en mémoire vive 51 le signal d'entrée Di à l'adresse de la première valeur de puissance inférieure PI1, cet emplacement mémoire étant ainsi utilisé comme un accumulateur,
- pas 11 : production des signaux d'adresse Ad et de mode RW de manière à affecter le signal de sortie Do de la première valeur de puissance supérieure PS1 de la mémoire vive 51 si k est inférieur à n3, cette première valeur de puissance supérieure ayant été initialisée à zéro à la réception du premier échantillon et production du deuxième signal d'addition S2,
- pas 12 : production du deuxième signal de sélection CM2 de manière à égaler le deuxième signal de multiplex M2 au deuxième signal d'addition S2 et production du troisième signal de transfert C33,
- pas 13 : le signal d'entrée Di prend la valeur du premier signal d'addition S1 suite à la production des troisième CM3 et quatrième CM4 signaux de sélection,
- pas 14 : production des signaux d'adresse Ad et de mode RW de manière à inscrire en mémoire vive 51 le signal d'entrée Di à l'adresse de la première valeur de puissance supérieure PS1, cet emplacement mémoire étant ainsi utilisé comme un accumulateur.

La troisième phase consiste à effectuer un traitement de l'échantillon imaginaire Q identique à celui qui a été fait sur un échantillon réel I dans la première phase, l'essentiel du processus qui se déroule sur les pas 15 à 20 ne sera donc pas détaillé, mais toutes les différences concernant la translation de fréquences seront soulignées :

- pas 19 (équivalent au pas 5) : production du signal de commande d'inversion C70 dans son deuxième état si k' vaut 0 ou 1 et dans son troisième état si k' vaut 2 ou 3.
- pas 20 (équivalent au pas 6) : production des signaux d'adresse Ad et de mode RW de manière à inscrire en mémoire vive 51 la valeur du signal de valeur opposée 0 à l'adresse du kième échantillon réel translaté I"k si k' est impair et à l'adresse du kième échantillon imaginaire translaté Q"k si k est pair.

La quatrième phase consiste à effectuer le calcul de la puissance d'un échantillon imaginaire corrigé Q'. Elle correspond exactement à la deuxième phase où l'on remplace I par Q et comprend donc 8 pas.

Une cinquième phase d'attente comprend 4 pas durant lesquels le séquenceur est inactif. Le prochain traitement démarrant avec l'apparition d'un nouvel échantillon complexe.

Les cinq phases sont répétés pour les n3 premiers échantillons. On obtient ainsi les premières valeurs de puissance inférieure PI1 et supérieure PS1.

Lorsque k est supérieur ou égal à n3 mais inférieur à 2.n3, le calcul de puissance effectué dans les deuxièmes et quatrième phase est identique si ce n'est qu'il se fait à partir de deux autres emplacements mémoire correspondant à une deuxième valeur de puissance inférieure PI2 et à une deuxième valeur de puissance supérieure PS2. Le processus est ainsi itéré selon une période correspondant à n3 échantillons jusqu'au dernier échantillon.

Ainsi, après le traitement des 156 échantillons réels I et des 156 échantillons imaginaires Q, sont stockées dans la mémoire vive 51:

- 156 échantillons réels translatés I"
- 156 échantillons imaginaires translatés Q",
- n'3 valeurs de puissance inférieure,
- n'3 valeurs de puissance supérieure,
  où n'3 est le résultat de la division de 156 par n3.

Le séquenceur cesse alors de fonctionner jusqu'à un prochain cycle et l'unité de commande peut venir lire dans sa mémoire vive toutes ces données.

Lorsque le signal de réception est un canal de contrôle de fréquence le dispositif de traitement de signal numérique est initialisé comme dans le cas précédent avec les valeurs suivantes :

- le mode de fonctionnement, contrôle, précisant que les opérations correction de la composante continue, translation en fréquence, filtrage et mesures de puissance doivent être effectuées,
- le nombre d'échantillons à traiter dans ce cas 1408 échantillons réels I et 1408 échantillons imaginaires Q,
- le nombre n2 d'échantillons sur lesquels se fait le filtrage, 8 ou 16 par exemple,

- le nombre n3 d'échantillons sur lesquels sont faits la mesure de puissance, 64 par exemple,
- les valeurs de correction réelle DCI et imaginaire DCQ sur 4 bits.

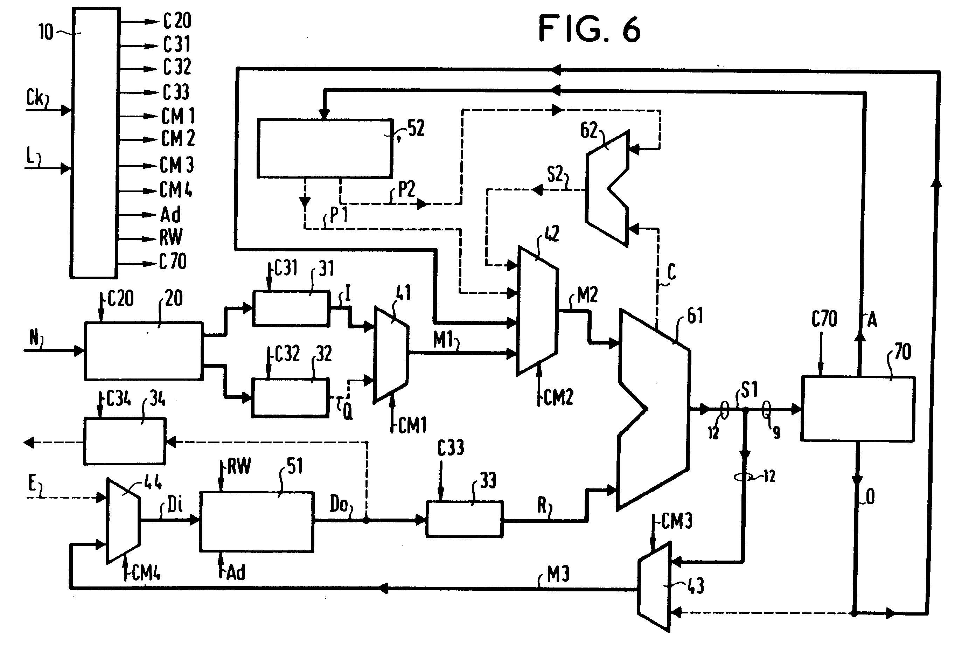

La première phase correspond à la correction de la composante continue, à la translation de fréquence et au filtrage pour un échantillon réel I. Elle s'étend sur les six premiers pas et le chemin des données est matérialisé comme précédemment sur la figure 6 :

- pas 1 : production du signal de commande d'entrée C20 pour transférer le contenu du registre d'entrée 20 aux premiers 31 et deuxième 32 registres de transfert et production des signaux d'adresse Ad et de mode RW de manière à affecter le signal de sortie Do de la valeur de correction réelle DCI,
- pas 2 : production du premier signal de transfert C31 pour produire un échantillon réel I en sortie du premier registre de transfert 31, production des premiers CM1 et deuxième CM2 signaux de sélection de manière à égaler le deuxième signal de multiplex M2 à un échantillon réel I et production du troisième signal de transfert C33.
- pas 3 : production des signaux d'adresse Ad et de mode RW de manière à affecter le signal de sortie Do d'une première valeur réelle filtrée If1 si k' est pair et d'une première valeur imaginaire filtrée Qf1 si k' est impair lorsque k est inférieur à n2, ces premières valeurs filtrés If1, Qf1 ayant été initialisées à zéro à la réception du premier échantillon, le premier signal d'addition qui a alors pour valeur l'échantillon réel corrigé (I' = I+ DCI) étant stocké à l'entrée du circuit d'inversion commandée 70,
- pas 4 : production du signal de commande d'inversion C70 dans un deuxième état si k' vaut 0 ou 3 et dans un troisième état si k' vaut 1 ou 2, production du deuxième signal de sélection CM2 de manière à égaler le deuxième signal de multiplex M2 au signal de valeur opposée 0 et production du troisième signal de transfert C33,
- pas 5 : le signal d'entrée est égalé au premier signal d'addition S1 suite à la production des troisième CM3 et quatrième CM4 signaux de sélection,
- pas 6 : production du signal de commande d'inversion C70 dans un premier état de manière à présenter le signal de valeur absolue à l'entrée de la mémoire morte 52 et production des signaux d'adresse Ad et de mode RW pour inscrire la valeur du signal d'entrée Di à l'emplacement de la première valeur réelle filtrée If1 si k' est pair ou à l'emplacement de la première valeur imaginaire filtrée Qf1 si k' est impair.

La deuxième phase correspond à la mesure de puissance d'un échantillon réel et est identique à la deuxième phase décrite dans le mode fonctionnement précédent.

La troisième phase consiste à appliquer à un échantillon imaginaire Q un traitement identique à celui qui est effectué sur un échantillon réel I dans la première phase. L'essentiel du processus qui se déroule sur les pas 1 à 6 ne sera donc pas détaillé, mais seules les différences concernant le filtrage seront soulignées :

- pas 3 : production des signaux d'adresse Ad et de mode RW de manière à affecter le signal de sortie Do d'une première valeur réelle filtrée If1 initialisée à zéro si k' est impair et d'une première valeur imaginaire filtrée Qf1 initialisée à zéro si k' est pair lorsque k est inférieur à n2,
- pas 6 : production des signaux d'adresse Ad et de mode RW pour inscrire la valeur du signal d'entrée Di à l'emplacement de la première valeur réelle filtrée If1 si k' est impair ou à l'emplacement de la première valeur imaginaire filtrée Qf1 si k' est pair.

La quatrième phase correspond à la mesure de puissance d'un échantillon imaginaire et est identique à la quatrième phase décrite dans le mode de fonctionnement précédent.

La cinquième phase, phase d'attente, permet de compléter le cycle à 32 pas.

Les cinq phases sont répétées sur tous les échantillons. Cependant dès que k est supérieur ou égal à n2 mais inférieur à 2n2, les premières valeurs réelle filtrée If1 et imaginaire filtrée Qf1 sont respectivement remplacées par des secondes valeurs réelle filtrée et imaginaire filtrée figurant dans deux autres emplacements mémoire. Les valeurs filtrées sont calculées sur des séries de n2 échantillons et lorsque les 1408 échantillons de chaque type auront été traités, la mémoire vive 51 comprendra n'2 valeurs réelles filtrées et n'2 valeurs imaginaires filtrées où n'2 est le résultat de la division de 1408 par n2.

La remarque faite sur le nombre de valeurs de puissance dans l'étude de mode de fonctionnement précédent s'applique ici aussi.

Ainsi, à la fin du cycle, la mémoire vive M comprend également n'3 valeurs de puissance inférieure et n'3 valeur de puissance supérieure où n'3 est le résultat de la division de 1408 par n3, soit 22 par exemple.

Le séquenceur cesse alors de fonctionner jusqu'à un prochain cycle et l'unité de commande peut venir lire dans la mémoire vive toutes les données.

Lorsque le signal de réception est un canal de diffusion, le dispositif de traitement de signal numérique est initialisé avec les valeurs suivantes :

- le mode de fonctionnement, diffusion, précisant que les opérations estimation de la composante continue instantanée, correction de la composante continue et mesure de puissance doivent être effectuées,
- le nombre d'échantillons à traiter, dans ce cas 144 échantillons réels I et 144 échantillons imaginaires Q,
- le nombre n1 d'échantillons sur lesquels sont faits l'estimation de la composante continue instantanée, 16 par exemple,
- le nombre n3 d'échantillons sur lesquels sont faites les mesures de puissance, 16 par exemple,
- les valeurs de correction réelle DCI et imaginaire DCQ sur 4 bits.

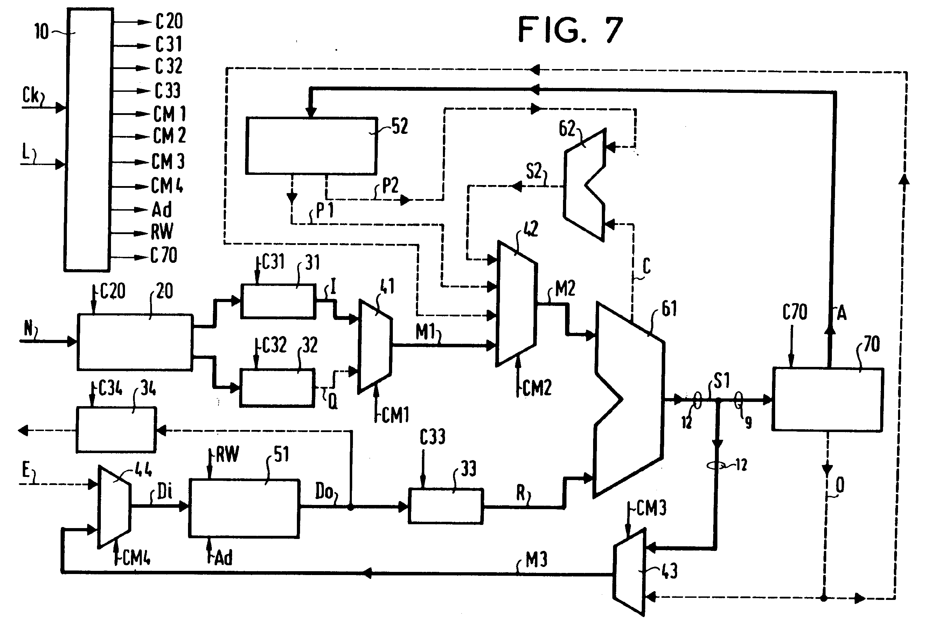

La première phase correspond à la correction de la composante continue et à l'estimation de la composante continue instantanée pour un échantillon réel I. Elle s'étend sur les six premiers pas et le chemin des données est matérialisé comme précédemment sur la figure 7 :
- pas 1 : production du signal de commande d'entrée C20 pour transférer le contenu de registre d'entrée 20 aux premier 31 et deuxième 32 registres de transfert,
- pas 2 : production des signaux d'adresse Ad et de mode RW de manière à affecter le signal de sortie Do de la valeur de correction réelle DCI et production du premier signal de transfert C31,
- pas 3 : production des premiers CM1 et deuxième CM2 signaux de sélection de manière à égaler le deuxième signal de multiplex M2 à l'échantillon réel I, production du troisième signal de transfert C33 et production des signaux d'adresse Ad et de mode RW de manière à affecter le signal de sortie Do d'une première composante continue réelle instantanée DCiI1 si k est inférieur à n1, cette première composante continue réelle instantanée ayant été initialisée à zéro à la réception du premier échantillon,
- pas 4 : stockage à l'entrée du circuit d'inversion commandée 70 du premier signal d'addition S1 valant alors un échantillon réel corrigé I' et production du troisième signal de transfert C33,
- pas 5 : le premier signal d'addition S1 valant dorénavant la somme de l'échantillon réel I et de la première composante continue réelle instantanée DCiI1, production des troisième CM3 et quatrième CM4 signaux de sélection pour égaler le signal d'entrée Di au premier signal d'addition S1,
- pas 6 : production du signal de commande d'inversion C70 dans un premier état afin de présenter le signal de valeur absolue A à l'entrée de la mémoire morte 52 et production des signaux d'adresse Ad et de mode RW de manière à inscrire à l'emplacement de la première composante continue réelle instantanée DCiI1 la valeur du signal d'entrée Di.

La seconde phase concerne la mesure de puissance pour un échantillon réel I et est identique à celles décrites précédemment.

La troisième phase consiste à effectuer un traitement identique pour un échantillon imaginaire à celui qui est fait sur un échantillon réel I dans la première phase de ce mode de fonctionnement et ne sera donc pas plus détaillée.

La quatrième phase concerne la mesure de puissance pour un échantillon imaginaire Q et est identique à celle décrites précédemment.

La cinquième phase joue le même rôle qu'énoncé précédemment.

Les remarques précédentes relatives aux nombres d'échantillons sur lesquels portent les différentes opérations s'appliquent ici également. Ainsi à l'issue d'un cycle la mémoire vive 51 comprend les données suivantes :
- n'1 composantes continues réelles instantanées et n'1 composantes continues imaginaires instantanées où n'1 est le résultat de la division de 144 par n1, soit 9, par exemple
- n'3 valeurs de puissance inférieure et n'3 valeurs de puissance supérieure où n'3 est le résultat de la division de 144 par n3, soit 9, par exemple.

Le séquenceur cesse alors de fonctionner jusqu'à un prochain cycle et l'unité de commande peut venir lire dans la mémoire vive toutes ces données.

La mesure de puissance qui se fait à l'aide de deux additionneurs 61, 62 dans l'exemple de réalisation décrit ci-dessus peut, sans sortir du cadre de l'invention, se faire avec un seul additionneur. Il suffit, en effet, de choisir une mémoire vive dont les emplacements comprennent un nombre de bits plus important. Cette remarque s'applique également si les valeurs absolues des échantillons réels et imaginaires sont représentées sur un nombre de bits moins important.

**Revendications**

1. Dispositif de traitement de signal numérique prévu notamment pour la mesure de puissance, la correction de composante continue et la translation en fréquence comprenant :
    - un premier additionneur (61) produisant un premier signal d'addition (S1) à partir d'un premier opérande (M2) et d'un signal de sortie (Do),
    - une mémoire vive (51) prévue pour produire ledit signal de sortie (Do) et pour recevoir un signal d'entrée (Di), caractérisé en ce qu'il comprend de plus :

- un circuit d'inversion commandée (70) fournissant sur une sortie au moins la valeur absolue (A), la valeur vraie ou la valeur opposée (0) dudit premier signal d'addition (S1)
- une mémoire morte (52) produisant un premier signal de puissance (P1) représentant la partie la moins significative du carré de ladite valeur absolue (A) exprimée sur un nombre de bits correspondant à la capacité dudit premier additionneur,
- un premier circuit de multiplexage (41, 42) produisant ledit premier opérande (M2) à partir d'un échantillon de signal numérique (M1), de ladite valeur vraie, de ladite valeur opposée ou dudit premier signal de puissance (P1),
- un deuxième circuit de multiplexage (43, 44) produisant ledit signal d'entrée (Di) à partir dudit premier signal d'addition (S1), de ladite valeur vraie ou de ladite valeur opposée,
- un séquenceur (10) recevant un signal d'horloge (Ck) et comprenant des moyens de commander sélectivement ladite mémoire vive (51), ledit circuit d'inversion commandée (70) et lesdits premier (41, 42) et deuxième (43, 44) circuits de multiplexage, de manière à effectuer notamment une correction de la composante continue et une translation en fréquence sur un dit échantillon, et une mesure de puissance sur une série d'échantillons.

2. Dispositif de traitement de signal numérique prévu notamment pour la mesure de puissance, la correction de composante continue et la translation en fréquence selon la revendication 1, caractérisé en ce que ledit séquenceur (10) est également prévu pour permettre le filtrage d'une série d'échantillons.

3. Dispositif de traitement de signal numérique prévu notamment pour la mesure de puissance, la correction de composante continue et la translation en fréquence selon la revendication 1 ou 2, caractérisé en ce que ledit séquenceur est de plus prévu pour permettre l'estimation de la composante continue instantanée d'une série d'échantillons.

4. Dispositif de traitement de signal numérique prévu notamment pour la mesure de puissance, la correction de composante continue et la translation en fréquence selon l'une quelconque des revendications précédentes caractérisé en ce que, le carré de ladite valeur absolue pouvant prendre une valeur supérieure à la capacité dudit premier additionneur (61), ladite mémoire morte (52) produit de plus un deuxième signal de puissance (P2) représentant la partie la plus significative du carré de ladite valeur absolue, un deuxième additionneur (62) produit comme deuxième signal d'addition (S2) la somme dudit deuxième signal de puissance et du signal de retenue (C) issu dudit premier additionneur (61), ledit premier circuit de multiplexage étant prévu pour recevoir de plus ledit deuxième signal d'addition, ledit séquenceur (10) étant prévu de plus pour effectuer ladite mesure de puissance sur lesdits premier (P1) et deuxième (P2) signaux de puissance.

5. Dispositif de traitement de signal numérique prévu notamment pour la mesure de puissance, la correction de composante continue et la translation en fréquence selon l'une quelconque des revendications précédentes caractérisé en ce que, lesdits échantillons étant alternativement un échantillon réel (I) et un échantillon imaginaire (Q) composant un échantillon complexe dont les bits se présentent successivement dans un signal de réception (N), il comprend un registre d'entrée (20) effectuant la mise en parallèle dudit échantillon complexe suivi d'un premier (31) et d'un deuxième (32) registres de transfert produisant respectivement ledit échantillon réel (I) et ledit échantillon imaginaire (Q), à destination dudit premier circuit de multiplexage, ledit séquenceur (10) comprenant des moyens de commande de ces trois registres (20, 31, 32).

6. Dispositif de traitement de signal numérique prévu notamment pour la mesure de puissance, la correction de composante continue et la translation en fréquence selon la revendication précédente, caractérisé en ce que ledit circuit d'inversion commandée (70) produit un signal de valeur absolue correspondant à la valeur absolue dudit premier signal d'addition (31) pour un premier état d'un signal de commande d'inversion (C70), et produit un signal de valeur opposée (0) prenant soit la valeur dudit premier signal d'addition (S1), soit son opposée selon que ledit signal de commande d'inversion est respectivement dans un deuxième ou un troisième état, le dit séquenceur (10 ) comprenant des moyens pour produire ledit signal de commande d'inversion (C70).

7. Dispositif de traitement de signal numérique prévu notamment pour la mesure de puissance, la correction de composante continue et la translation en fréquence selon la revendication 6, caractérisé en ce que ledit premier circuit de multiplexage comprend un premier multiplexeur (41) produisant un premier signal de multiplex (M1) à partir dudit échantillon réel (I) et dudit échantillon imaginaire (Q) et comprend un deuxième multiplexeur produisant ledit premier opérande comme deuxième signal de multiplex (M2) à partir dudit premier signal de multiplex (M1), dudit signal de valeur opposée (0), dudit premier signal de puissance (P1) ou dudit deuxième signal d'addition (S2), ces deux multiplexeurs étant commandés par ledit séquenceur (10).

8. Dispositif de traitement de signal numérique prévu notamment pour la mesure de puissance, la correction de composante continue et la translation en fréquence selon l'une des revendications 6 ou 7, caractérisé en ce que ledit deuxième circuit de multiplexage comprend un troisième multiplexeur (43) produisant un troisième signal de multiplex (M3) à partir dudit premier signal d'addition (S1) ou dudit signal de valeur opposées (0), et comprend un quatrième multiplexeur (44) produisant ledit signal d'entrée (Di) à partir dudit troisième signal de multiplex ou d'un signal de donnée externe (E), ces deux derniers multiplexeurs (43, 44) étant commandés par ledit séquenceur (10).

9. Dispositif de traitement de signal numérique prévu notamment pour la mesure de puissance, la correction de composante continue et la translation en fréquence selon l'une quelconque des revendications précédentes, caractérisé en ce qu'il comprend un registre de sortie (33) produisant un signal de registre de sortie (R) qui est le deuxième opérande dudit premier additionneur (61) et dont la valeur est celle dudit signal de sortie (Do) en réponse à un signal de transfert (C33) issu dudit séquenceur (10).

10. Dispositif de traitement de signal numérique prévu notamment pour la mesure de puissance, la correction de composante continue et la translation de fréquence selon l'une quelconque des revendications précédentes, caractérisé en ce qu'il comprend un registre d'interface (34) recevant ledit signal de sortie (Do).

11. Dispositif de traitement de signal numérique prévu notamment pour la mesure de puissance, la correction de composante continue et la translation en fréquence selon l'une quelconque des revendications 5 à 10 caractérisé en ce que, ledit signal de réception (N) étant un canal de trafic du système de radiocommunications cellulaire numérique, lesdits échantillons complexes se présentant périodiquement selon une période de transmission, ledit signal d'horloge (Ck) a une fréquence telle que la correction de la composante continue, la translation en fréquence et la mesure de puissances relatives à un échantillon complexe se font pendant une dite période de transmission.

12. Dispositif de traitement de signal numérique prévu notamment pour la mesure de puissance, la correction de composante continue et la translation en fréquence selon la revendication précédente caractérisé en ce que, ledit signal de réception (N) étant désormais un canal de contrôle de fréquence, ledit signal d'horloge (Ck) a une fréquence telle que la correction de la composante continue, la translation en fréquence, le filtrage et la mesure de puissance relatives à un échantillon complexe se font pendant une dite période de transmission.

13. Dispositif de traitement de signal numérique prévu notamment pour la mesure de puissance, la correction de composante continue et la translation en fréquence selon la revendication précédente, caractérisé en ce que, ledit signal de réception (N) étant désormais un canal de diffusion, ledit signal d'horloge (Ck) a une fréquence telle que l'estimation de la composante continue instantanée, la correction de la composante continue et la mesure de puissance relatives à un dit échantillon complexe se font pendant une dite période de transmission.

14. Dispositif de traitement de signal numérique prévu notamment pour la mesure de puissance, la correction de composante continue et la translation en fréquence selon l'une quelconque des revendication précédentes caractérisé en ce que, ledit séquenceur (10) progressant d'un pas sur chaque front dudit signal d'horloge, ce signal d'horloge a une fréquence identique à la fréquence d'apparition des bits d'un dit échantillon.

**Patentansprüche**

1. Vorrichtung zur Verarbeitung eines digitalen Signals, insbesondere zur Leistungsmessung, zur Korrektur der Gleichstromkomponente und zur Frequenzumsetzung, wobei die Vorrichtung aufweist:
   - einen ersten Addierer (61), der ein erstes Additionssignal (S1) ausgehend von einem ersten Operanden (M2) und einem Ausgangssignal (Do) erzeugt,
   - einen Arbeitsspeicher (51), der dieses Ausgangssignal (Do) liefert und ein Eingangssignal (Di) empfängt, dadurch gekennzeichnet, daß die Vorrichtung außerdem aufweist:

- eine gesteuerte Inversionsschaltung (70), die an einem Ausgang mindestens den Absolutwert (A), den tatsächlichen Wert oder den entgegengesetzten Wert (O) des ersten Additionssignals (S1) liefert,
- einen Festspeicher (52), der ein erstes Leistungssignal (P1) liefert, das den geringer gewichteten Teil des Quadrats des Absolutwerts (A) darstellt, der mit einer Anzahl von Bits entsprechend der Kapazität des ersten Addierers ausgedrückt wird,
- eine erste Multiplexierschaltung (41, 42), die den ersten Operanden (M2) ausgehend von einer digitalen Signaltastprobe (M1) des tatsächlichen Werts, des entgegengesetzten Werts oder des ersten Leistungssignals (P1) liefert,
- eine zweite Multiplexierschaltung (43, 44), die das Eingangssignal (Di) ausgehend vom ersten Additionssignal (S1), vom tatsächlichen Wert oder vom entgegengesetzten Wert liefert,
- eine Folgeschaltung (10), die ein Taktsignal (Ck) empfängt und Mittel zur selektiven Steuerung des Arbeitsspeichers (51) der gesteuerten Inversionsschaltung (70) und der ersten und der zweiten Multiplexierschaltung (41, 42; 43, 44) enthält, so daß insbesondere eine Korrektur der Gleichstromkomponente und eine Frequenzumsetzung an einer Tastprobe und eine Leistungsmessung an einer Reihe von Tastproben durchgeführt werden.

2. Vorrichtung zur Verarbeitung eines digitalen Signals, insbesondere zur Leistungsmessung, zur Korrektur der Gleichstromkomponente und zur Frequenzumsetzung, nach Anspruch 1, dadurch gekennzeichnet, daß die Folgeschaltung (10) weiter so gestaltet ist, daß sie eine Filterung einer Reihe von Tastproben erlaubt.

3. Vorrichtung zur Verarbeitung eines digitalen Signals, insbesondere zur Leistungsmessung, zur Korrektur der Gleichstromkomponente und zur Frequenzumsetzung, nach Anspruch 1 oder 2, dadurch gekennzeichnet, daß die Folgeschaltung außerdem die Abschätzung der augenblicklichen Gleichstromkomponente einer Reihe von Tastproben erlaubt.

4. Vorrichtung zur Verarbeitung eines digitalen Signals, insbesondere zur Leistungsmessung, zur Korrektur der Gleichstromkomponente und zur Frequenzumsetzung, nach einem beliebigen der vorhergehenden Ansprüche, dadurch gekennzeichnet, daß, da das Quadrat des Absolutwerts einen Wert annehmen kann, der die Kapazität des ersten Addierers (61) übersteigt, der Festspeicher (52) außerdem ein zweites Leistungssignal (P2) liefert, das den Teil höherer Wichtung des Quadrats dieses Absolutwerts darstellt, daß ein zweiter Addierer (62) als zweites Additionssignal (S2) die Summe des zweiten Leistungssignals und des Übertragssignals (C) aus der dem ersten Addierer (61) erzeugt, wobei die erste Multiplexierschaltung außerdem das zweite Additionssignal empfangen kann und die Folgeschaltung (10) außerdem die Leistungsmessung anhand des ersten und zweiten Leistungssignals (P1, P2) durchführen kann.

5. Vorrichtung zur Verarbeitung eines digitalen Signals, insbesondere zur Leistungsmessung, zur Korrektur der Gleichstromkomponente und zur Frequenzumsetzung, nach einem beliebigen der vorhergehenden Ansprüche, dadurch gekennzeichnet, daß, da die Tastproben abwechselnd eine reelle Tastprobe (I) und eine imaginäre Tastprobe (Q) bilden, die eine komplexe Tastprobe ergeben, deren Bits nacheinander in einem Empfangssignal (N) auftreten, die Vorrichtung ein Eingangsregister (20) aufweist, das diese komplexe Tastprobe in parallele Form umwandelt und dem ein erstes und ein zweites Transferregister (31, 32) folgen, die die reelle Tastprobe (I) bzw. die imaginäre Tastprobe (Q) erzeugen und an die erste Multiplexierschaltung senden, wobei die Folgeschaltung (10) Mittel zur Steuerung dieser drei Register (20, 31, 32) besitzt.

6. Vorrichtung zur Verarbeitung eines digitalen Signals, insbesondere zur Leistungsmessung, zur Korrektur der Gleichstromkomponente und zur Frequenzumsetzung, nach Anspruch 5, dadurch gekennzeichnet, daß die gesteuerte Inversionsschaltung (70) ein Absolutwertsignal entsprechend dem Absolutwert des ersten Additionssignals (31) für einen ersten Zustand eines Inversionssteuersignals (C70) sowie ein Signal entgegengesetzten Werts (O) erzeugt, das entweder den Wert des ersten Additionssignals (S1) oder seinen entgegengesetzten Wert annimmt, je nachdem, ob sich das Inversionssteuersignal in einem zweiten oder einem dritten Zustand befindet, wobei die Folgeschaltung (10) Mittel zur Erzeugung des Inversionssteuersignals (C70) besitzt.

7. Vorrichtung zur Verarbeitung eines digitalen Signals, insbesondere zur Leistungsmessung, zur Korrektur der Gleichstromkomponente und zur Frequenzumsetzung, nach Anspruch 6, dadurch gekennzeichnet, daß die erste Multiplexierschaltung einen ersten Multiplexer (41), der ein erstes Multiplexsignal (M1) ausgehend von der reellen Tastprobe (I) und der imaginären Tastprobe (Q) erzeugt, und einen zweiten Multiplexer aufweist, der den ersten Operanden als zweites Multiplexsignal (M2) ausgehend vom ersten Multiplexsignal (M1), vom Signal des entgegengesetzten Werts (O) und vom ersten Leistungssignal (P1) oder vom zweiten Additionssignal (S2) erzeugt, wobei diese beiden Multiplexer von der Folgeschaltung (10) gesteuert werden.

8. Vorrichtung zur Verarbeitung eines digitalen Signals, insbesondere zur Leistungsmessung, zur Korrektur der Gleichstromkomponente und zur Frequenzumsetzung, nach einem der Ansprüche 6 und 7, dadurch gekennzeichnet, daß die zweite Multiplexierschaltung einen dritten Multiplexer (43), der ein drittes Multiplexsignal (M3) ausgehend vom ersten Additionssignal (S1) oder dem Signal entgegengesetzten Werts (O) erzeugt, und einen vierten Multiplexer (44) enthält, der das Eingangssignal (Di) ausgehend vom dritten Multiplexsignal oder einem externen Datensignal (E) erzeugt, wobei diese beiden letztgenannten Multiplexer (43, 44) von der folgeschaltung (10) gesteuert werden.

9. Vorrichtung zur Verarbeitung eines digitalen Signals, insbesondere zur Leistungsmessung, zur Korrektur der Gleichstromkomponente und zur Frequenzumsetzung, nach einem beliebigen der vorhergehenden Ansprüche, dadurch gekennzeichnet, daß sie ein Ausgangsregister (33) enthält, das ein Ausgangsregistersignal (R) liefert, welches den zweiten Operanden des ersten Addierers (61) bildet und dessen Wert dem des Ausgangssignals (Do) abhängig von einem Transfersignal (C33) aus der Folgeschaltung (10) entspricht.

10. Vorrichtung zur Verarbeitung eines digitalen Signals, insbesondere zur Leistungsmessung, zur Korrektur der Gleichstromkomponente und zur Frequenzumsetzung nach einem beliebigen der vorhergehenden Ansprüche, dadurch gekennzeichnet, daß sie ein Schnittstellenregister (34) aufweist, das das Ausgangssignal (Do) empfängt.

11. Vorrichtung zur Verarbeitung eines digitalen Signals, insbesondere zur Leistungsmessung, zur Korrektur der Gleichstromkomponente und zur Frequenzumsetzung, nach einem beliebigen der Ansprüche 5 bis 10, dadurch gekennzeichnet, daß, wenn das Empfangssignal (N) ein Verkehrskanal des digitalen zellenförmigen Funknachrichtensystems ist und die komplexen Tastproben periodisch gemäß einer Übertragungsperiode auftreten, das Taktsignal (Ck) eine solche Frequenz besitzt, daß die Korrektur der Gleichstromkomponente, die Frequenzumsetzung und die Leistungsmessung an einer komplexen Tastprobe während einer Übertragungsperiode erfolgen.

12. Vorrichtung zur Verarbeitung eines digitalen Signals, insbesondere zur Leistungsmessung, zur Korrektur der Gleichstromkomponente und zur Frequenzumsetzung, nach Anspruch 11, dadurch gekennzeichnet, daß, wenn das Empfangssignal (N) ein Frequenzkontrollkanal ist, das Taktsignal (Ck) eine solche Frequenz hat, daß die Korrektur der Gleichstromkomponente, die Frequenzumsetzung und die Leistungsmessung an einer komplexen Tastprobe während einer Übertragungsperiode erfolgen.

13. Vorrichtung zur Verarbeitung eines digitalen Signals, insbesondere zur Leistungsmessung, zur Korrektur der Gleichstromkomponente und zur Frequenzumsetzung, nach Anspruch 12, dadurch gekennzeichnet, daß, wenn das Empfangssignal (N) ein Diffusionskanal ist, das Taktsignal (Ck) eine solche Frequenz hat, daß die Abschätzung der augenblicklichen Gleichstromkomponente, die Korrektur der Gleichstromkomponente und die Leistungsmessung an einer komplexen Tastprobe während einer Übertragungsperiode erfolgen.

14. Vorrichtung zur Verarbeitung eines digitalen Signals, insbesondere zur Leistungsmessung, zur Korrektur der Gleichstromkomponente und zur Frequenzumsetzung, nach einem beliebigen der vorhergehenden Ansprüche, dadurch gekennzeichnet, daß die Folgeschaltung (10) mit jeder Flanke des Taktsignals weitergeschaltet wird und das Taktsignal eine Frequenz hat, die der Frequenz des Auftretens der Bits in einer Tastprobe gleicht.

## Claims

1. Digital signal processor device for power measurement, direct current component correction and frequency translation, comprising:

- a first adder (61) producing a first addition signal (S1) from a first operand (M2) and an output signal (Do),
- a random access memory (51) adapted to produce said output signal (Do) and to receive an input signal (Di), characterised in that it further comprises:
- a selective inverter circuit (70) supplying at an output at least the absolute value (A), the true value or the opposite value (0) of said first addition signal (S1),
- a read only memory (52) producing a first power signal (P1) representing the less significant part of the square of said absolute value (A) expressed on a number of bits corresponding to the capacity of said first adder,
- a first multiplexing circuit (41, 42) producing said first operand (M2) from a digital signal sample (M1), said true value, said opposite value or said first power signal (P1),
- a second multiplexing circuit (43, 44) producing said input signal (Di) from said first addition signal (S1), said true value or said opposite value,
- a sequencer (10) receiving a clock signal (Ck) and comprising selective control means for said random access memory (51), said selective inverter circuit (70) and said first multiplexing circuit (41, 42) and said second multiplexing circuit (43, 44), so as to carry out correction of the direct current component, frequency translation on a sample and power measurement on a series of samples.

2. Digital signal processor device for power measurement, direct current component correction and frequency translation according to claim 1, characterised in that said sequencer (10) is also adapted to filter a series of samples.

3. Digital signal processor device for power measurement, direct current component correction and frequency translation according to claim 1 or claim 2, characterised in that said sequencer is further adapted to estimate the instantaneous direct current component of a series of samples.

4. Digital signal processor device for power measurement, direct current component correction and frequency translation according to any one of the preceding claims, characterised in that, the square of said absolute value being able to assume a value greater than the capacity of said first adder (61), said read only memory (52) also produces a second power signal (P2) representing the more significant part of the square of said absolute value, a second adder (62) produces by way of said second addition signal (S2) the sum of said second power signal and the carry signal (C) from said first adder (61), said first multiplexing circuit being adapted further to receive said second addition signal, said sequencer (10) being further adapted to carry out said power measurement on said first and second power signals (P1, P2).

5. Digital signal processor device for power measurement, direct current component correction and frequency translation according to any one of the preceding claims characterised in that, said samples being alternately a real sample (I) and an imaginary sample (Q) constituting a complex sample the bits of which are present in succession in a receive signal (N), it comprises an input register (20) for paralleling said complex sample followed by first and second transfer registers (31, 32) respectively producing said real sample (I) and said imaginary sample (Q) which are supplied to said first multiplexing circuit, said sequencer (10) comprising control means for said three registers (20, 31, 32).

6. Digital signal processor device for power measurement, direct current component correction and frequency translation according to the preceding claim, characterised in that said selective inverter circuit (70) produces a signal of absolute value corresponding to the absolute value of said first addition signal (31) for a first state of an inversion control signal (C70) and produces a signal of opposite value (0) assuming either the value of said first addition signal (S1) or its opposite according to whether said inversion control signal is respectively in a second or a third state, said sequencer (10) comprising means for producing said inversion control signal (C70).

7. Digital signal processor device for power measurement, direct current component correction and frequency translation according to claim 6, characterised in that said first multiplexing circuit comprises a first multiplexer (41) producing a first multiplex signal (M1) from said real sample (I) and said imaginary sample (Q) and comprises a second multiplexer producing said first operand as a second multiplex signal (M2) from said first multiplex signal (M1), said opposite value signal (0), said first power signal (P1) or said second addition signal (S2), said two multiplexers being controlled by said sequencer (10).

8. Digital signal processor device for power measurement, direct current component correction and frequency translation according to either claim 6 or claim 7, characterised in that said second multiplexing circuit comprises a third multiplexer (43) producing a third multiplex signal (M3) from said first addition signal (S1) or said opposite value signal (0) and a fourth multiplexer (44) producing said input signal (Di) from said third multiplex signal or an external data signal (E), the latter two multiplexers (43, 44) being controlled by said sequencer (10).

9. Digital signal processor device for power measurement, direct current component correction and frequency translation according to any one of the preceding claims, characterised in that it comprises an output register (33) producing an output register signal (R) which is the second operand of said first adder (61) and whose value is that of said output signal (Do) in response to a transfer signal (C33) from said sequencer (10).

10. Digital signal processor device for power measurement, direct current component correction and frequency translation according to any one of the preceding claims, characterised in that it comprises an interface register (34) receiving said output signal (Do).

11. Digital signal processor device for power measurement, direct current component correction and frequency translation according to any one of claims 5 to 10, characterised in that, when said receive signal (N) is a traffic channel of a digital cellular mobile radio system, said complex samples are presented periodically with a transmission period, said clock signal (Ck) has a frequency such that direct current component correction, frequency translation and power measurement relating to a complex sample are carried out during a transmission period.

12. Digital signal processor device for power measurement, direct current component correction and frequency translation according to the preceding claim, characterised in that, when said receive signal (N) is a frequency control channel, said clock signal (Ck) has a frequency such that direct current component correction, frequency translation, filtering and power measurement in relation to a complex sample are carried out during a transmission period.

13. Digital signal processor device for power measurement, direct current component correction and frequency translation according to the preceding claim, characterised in that, when said receive signal (N) is a broadcast control channel, said clock signal (Ck) has a frequency such that estimation of the instantaneous direct current component, correction of the direct current component and power measurement relating to a complex sample are carried out during a transmission period.

14. Digital signal device for power measurement, direct current component correction and frequency translation according to any one of the preceding claims, characterised in that, said sequencer (10) advancing by one step on each edge of said clock signal, said clock signal has a frequency identical to the frequency of appearance of the bits of the sample.

FIG. 1

FIG. 2

EP 0 459 339 B1

# FIG. 3

EP 0 459 339 B1

FIG. 4

FIG. 5

FIG. 6

EP 0 459 339 B1

FIG. 7